Europäisches Patentamt

European Patent Office

Office européen des brevets

(19)

(11) Publication number: **0 064 586**

**A1**

(12) **EUROPEAN PATENT APPLICATION**

(21) Application number: 82102304.1

(22) Date of filing: 20.03.82

(51) Int. Cl.³: **B 29 F 1/00**

(30) Priority: 12.05.81 IT 2164681

(43) Date of publication of application:
17.11.82 Bulletin 82/46

(84) Designated Contracting States:
AT BE CH DE FR GB LI LU NL SE

(71) Applicant: Ghilardi, Tarcisio
Vle Padova, 256
I-20132 Milano(IT)

(72) Inventor: Ghilardi, Tarcisio
Vle Padova, 256
I-20132 Milano(IT)

(74) Representative: Gervasi, Gemma et al,
Studio Brevetti e Marchi NOTARBARTOLO & GERVASI
33, Viale Bianca Maria
I-20122 Milano(IT)

(54) **Hydraulic press for moulding plastics.**

(57) Hydraulic presses for moulding plastics pieces having threaded parts, comprising an unscrewing device or unit constituted essentially by a hydraulic motor (15) and a mould support plate (14) comprising in its inside the control transmissions for the motor and on its outside a device, (17) preferably disposed centrally, arranged to communicate the rotary movement of the motor to the threading mandrels. The main characteristic of the new presses is the fact that the hydraulic motor (15) operates totally from the main hydraulic circuit from which it is branched, and the unscrewing stage begins at the beginning of the mould opening stage and terminates at the latest simultaneously with the end of it.

FIG. 3

EP 0 064 586 A1

- 1 -

# HYDRAULIC PRESS FOR MOULDING PLASTICS

This invention relates to hydraulic presses for moulding plastics pieces comprising threaded parts.

Reference will be made hereinafter for simplicity to injection presses for thermoplastics, but the description can also refer to other types of presses such as presses for the compression moulding of thermosetting materials.

A hydraulic press for the injection moulding of thermoplastics is known to comprise essentially:
1) a mould opening and closing assembly
2) a plasticising and injector assembly
3) a cycle and temperature control panel.

In particular the mould opening and closing assembly is constituted essentially by two mould support plates, one of which is fixed to the rigid frame of.the assembly whereas the other is mobile and carries out the closure and opening movements by sliding on ground columns under the control of a hydraulic piston.

The fixed plate on which one half of the mould is mounted is located close to the nozzle of the injector cylinder, and a bore is provided in the centre of it for housing the nozzle.

The mobile plate carries the second half mould and determines its closure and opening.   It is directly connected to a hydraulic piston mechanism which has to exert a closure power sufficient to provide perfect sealing of the mould during the pressure exerted by the thermoplastic material injected.   Most of the injection presses used at the present time are provided with hydraulically operated closing and opening assemblies which derive the necessary pressure from self-contained hydraulic units comprising a pump for circulating the oil in the hydraulic circuit.

An expulsion device for the moulded piece or pieces is usually mounted on the mobile plate.

It is also well known that if threaded pieces are required to be produced by injection moulding, the mobile mould comprises threading mandrels which in most cases remain at rest during the injection of the thermoplastic material and during the opening of the mould.

When the open mould has reached its end-of-stroke position, an electric motor, a piston or a hydraulic motor operates and, by means of suitable connections situated in the mould support plate, transmits to the mandrels a rapid rotary movement which threads the piece.   The device for expelling the pieces then begins to operate.   In all hydraulic presses of the described type which are known at the present time, the production of threaded pieces requires a completely independent circuit operated by an independent electric or hydraulic motor.

The object of the present invention is a new hydraulic press for moulding threaded pieces in which the rotary movement of the threading mandrels is provided by a hydraulic motor connected into the main hydraulic circuit, and terminates simultaneously with the end of the mould opening cycle.

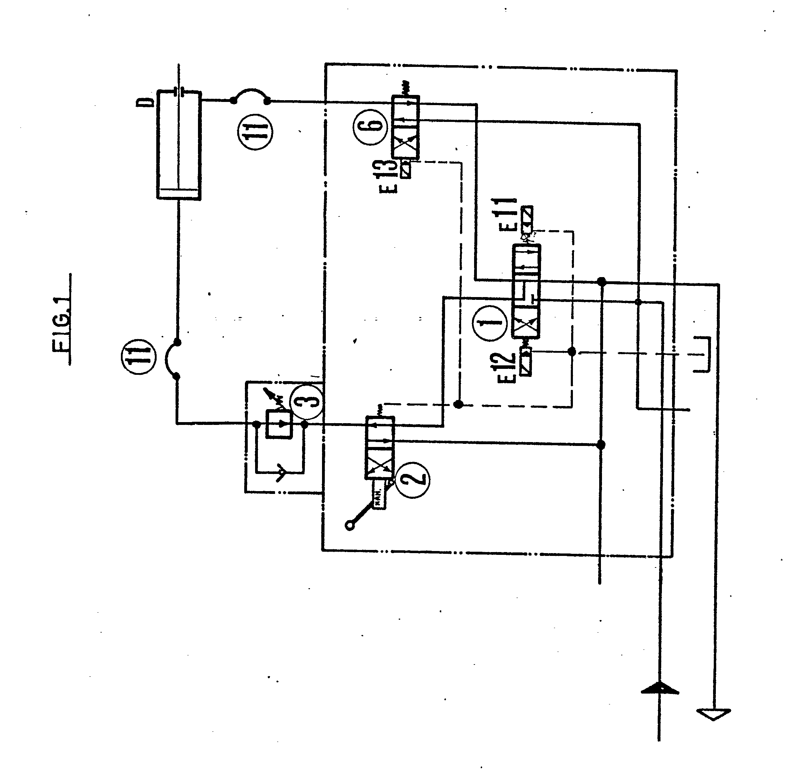

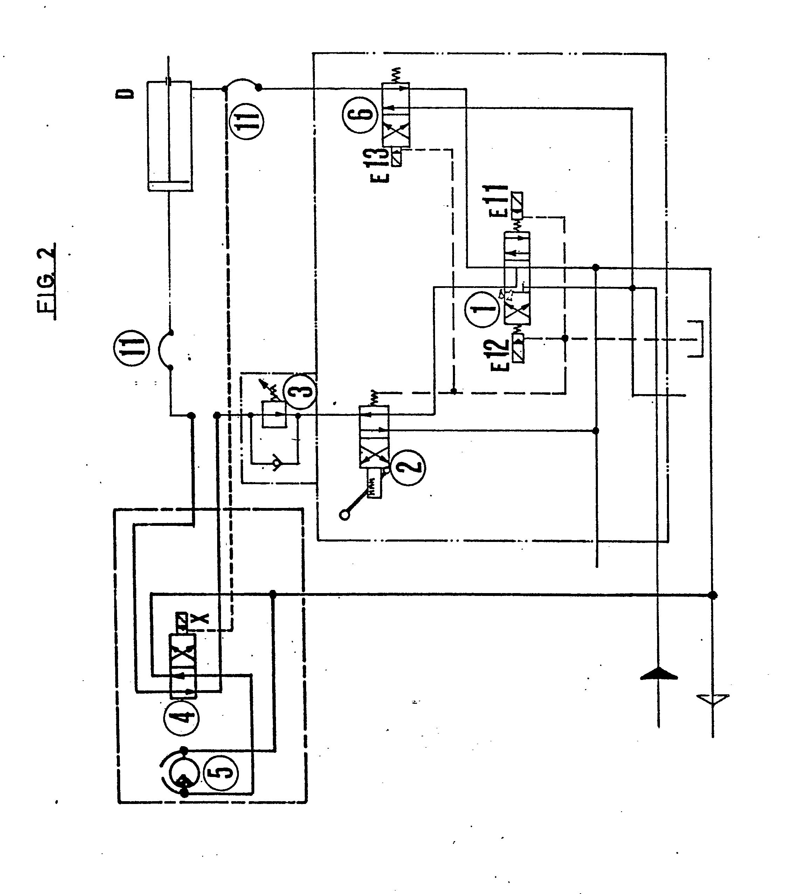

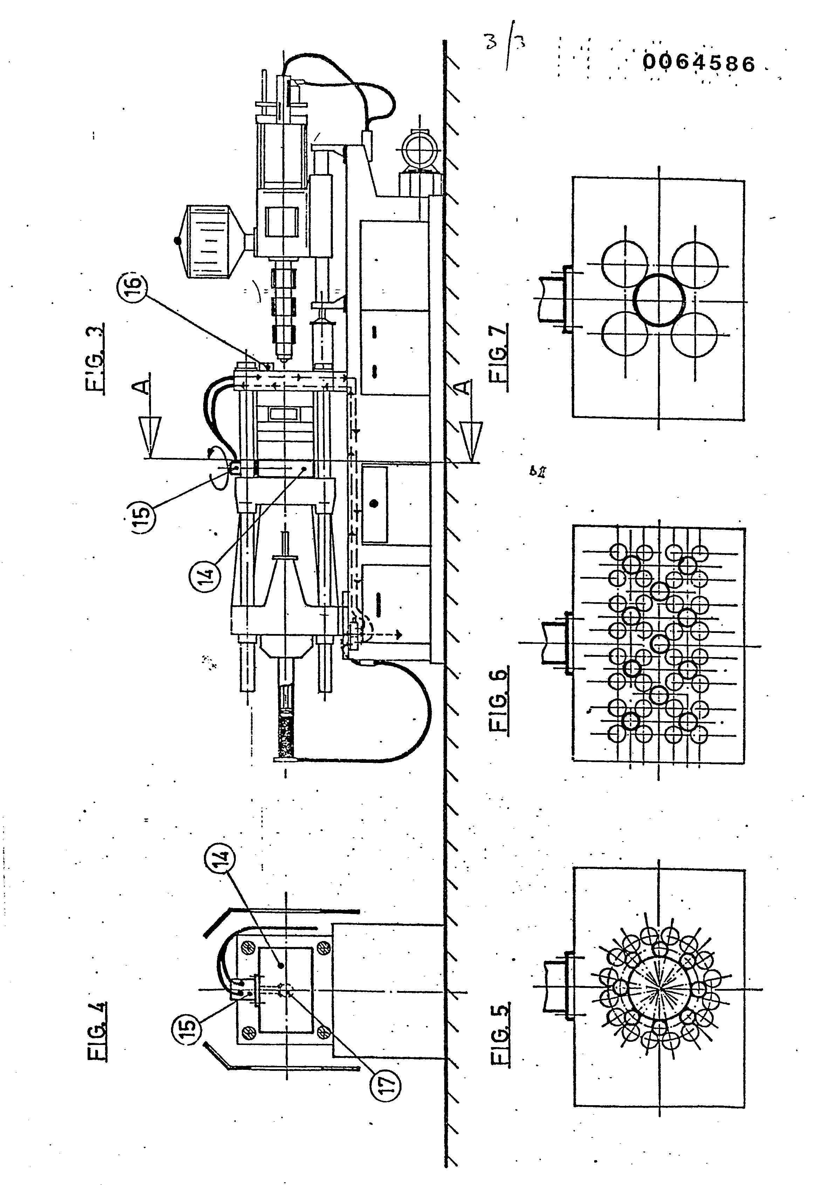

The present invention will be more apparent with reference to the accompanying drawings in which Figure 1 shows the basic hydraulic circuit for controlling the mould opening and closure in a hydraulic moulding press of known type; Figure 2 shows the hydraulic circuit for controlling the mould opening and closure and for simultaneously controlling the threading mandrels in a new hydraulic press according to the present invention; Figure 3 is a diagrammatic side view of a new hydraulic press according to the present invention; Figure 4 is a detail of Figure 3 on the section A-A, namely the mould support plate for the mobile half-mould, on which the hydraulic motor is positioned; and Figures 5, 6, 7 show examples of the cavities in the mobile half-mould.

In the normal cycle shown in Figure 1, the mould closure stage is carried out basically as follows: the solenoid $E_{11}$ is energised so that the oil originating from the motorised pump unit is conveyed through the controlled electrodistributor 1, the manually controlled distributor 2 which is normally activated by the press protection gate, and the control valve 3, to the piston side of the closure jack D. The jack moves until it reaches the selector which then allows the high pressure oil to close the mould.

At this point, the mechanical toggle passes from its point of force to its dead point.

When injection has taken place, the mould opening stage begins as follows: the solenoid $E_{12}$ is energised, thus reversing the position of the controlled electrodistributor 1, which conveys the oil arriving from the motorised pump unit, through the controlled electrodistributor 6 and to the rod side of the closure jack D. The jack begins its return stroke, and after a movement of 40-80 mm the toggle passes from its dead point to its point of force, to cause opening of the mould.

However, in the case of a press according to the present invention, the mould closure and opening cycle is carried out as illustrated diagrammatically in Figure 2.

The mould closure stage proceeds in the usual manner: the solenoid $E_{11}$ is energised to move the controlled electrodistributor 1 into the position for conveying oil from the motorised pump unit, through the manually controlled distributor 2, the control valve 3 and the controlled electrodistributor 4 to the piston side of the jack D. The jack moves until it operates the selector, which causes the high pressure oil to close the mould.

The mechanical toggle passes from its point of force to its dead point.

When injection has taken place, the opening stage then begins, proceeding in the following manner with reference to the diagram of Figure 2: the solenoid $E_{12}$ is energised to reverse the position of the controlled electrodistributor 1, which conveys the oil from the motorised pump unit to the controlled electrodistributor 6, and then through this to the rod side of the closure jack D. The piston moves, so beginning its return movement, and the toggle passes from its dead point to its point of force. When the piston reaches the selector, which previously ensured that the mould was closed, an activation signal is fed to the solenoid of the controlled electrodistributor 4, which reverses its position, so allowing oil to flow towards the hydraulic motor 5. The motor begins to turn, so operating the unscrewing device disposed in the mould support plate, and this communicates its movement to the threaded mandrel or mandrels.

The hydraulic motor 5 is suitably chosen according to the required threads and the opening stroke and speed of the mould, so that the unscrewing operation terminates at the latest simultaneously with the end of the mould opening cycle.

The oil cycle for a press according to the present invention can also be seen in Figure 3, in which the reference numeral 14 indicates the mould support plate and 15 the hydraulic motor for driving the mandrels.

The same parts are visible in Figure 4, in which in the mould support plate the reference numeral 17 indicates the central device for communicating the hydraulic motor rotary movement to the threaded mandrels.

Figures 5, 6, 7 show by way of example some moulds which can be fitted to the mould support plate according to the present invention, and comprising a plurality of cavities for producing a like number of threaded pieces.

As can be clearly seen by comparing the diagram of Figure 1 with the diagram of Figure 2, the hydraulic motor/mould support plate assembly comprising the control transmissions for the motor constitutes a self-contained unit which can be easily connected into or cut out of a normal mould closure and opening cycle of known type by merely connecting or disconnecting a connector.

The hydraulic motor and relative devices of the mould support plate can be connected in or cut out under the control of a manually operated electrical selector. By way of example, in Figure 3 the electrical selector has been indicated by 16, but it is apparent that it can be positioned in any other point of the press or even outside it. This selector

- 6 -                                    0064586

positions the controlled electrodistributor 4.

From the aforegoing, it is also apparent that any injection press comprising a hydraulic circuit for controlling the mould closure and opening cycle can be easily modified according to the present invention by connecting the hydraulic motor/mould support plate assembly comprising the transmission devices into the original hydraulic circuit, in accordance with the diagrams described heretofore.

The mould support plate illustrated in Figure 4, comprising a centrally situated transmission for the rotary movement, has been especially designed to allow the use of different interchangeable moulds having different piece shapes and figure arrangements.

In this respect, the centrally situated transmission for the rotary movement enables the figure arrangement in the mould to be geometrically developed either radially individually, or radially in groups (or multiple), or along multiple parallel lines. This latter arrangement is particularly suitable for optimum utilisation of hot runner moulds without risers.

The progress attained by the new presses according to the present invention over presses of the known art consists essentially in a considerable energy saving, in that the unscrewing operation on the pieces is carried out using the main circuit without having to supply an additional energy system, and in a considerable increase in productivity in that the additional times necessary for the unscrewing operation, which normally follow the end of the mould opening stage, are abolished.

In order to quantify the energy, mechanical and production efficiencies of the new presses for the purpose of making the technical progress attained by them more apparent, it can be stated that:

- the energy efficiency is between 80 and 90% according to the type of motor used;

- the mechanical efficiency is 200% with respect to conventional mechanical systems, in that the mandrels are rotated for unscrewing purposes only while the mould is being opened, whereas in all known systems the threading mandrels rotate a second time in addition to their working stage, with consequent double wear of the mechanical parts used;

- the production efficiency is 100% in that the unscrewing stage begins with the beginning of mould opening, and terminates at the latest simultaneously with the end of mould opening.

As already stated, in addition to the main energy efficiency aspect, further very important aspects of the present invention are as follows:

- the facility for application to already existing presses

- reversibility, i.e. the facility at any moment for return to the initial press without the unscrewing device, in that the unscrewing unit is a self-contained device not forming an integral part of the mould, and easily disconnectable in order to restore the initial circuit.

PATENT CLAIMS

1. A hydraulic press for moulding plastics pieces having threaded parts, characterised by comprising an unscrewing device controlled by a hydraulic motor connected into the main hydraulic circuit and operated by said circuit during the mould opening stage.

2. A press as claimed in claim 1, wherein the unscrewing device is constituted essentially by a hydraulic motor and a mould support plate which internally comprises the motor transmissions and externally comprises a device arranged to transmit the hydraulic motor rotary movement to the threading mandrels.

3. A press as claimed in claim 2, wherein the device for transmitting the hydraulic motor rotary movement to the threading mandrels is disposed in the centre of the mould support plate.

4. A press as claimed in claim 1, wherein the unscrewing stage terminates at the latest simultaneously with the end of the mould opening stage.

5. An unscrewing device for threaded pieces produced by moulding plastics, applicable to any plastics press operating with a hydraulic circuit, constituted essentially by a hydraulic motor and a mould support plate internally comprising the motor transmissions and externally comprising a device arranged to transmit the hydraulic motor rotary movement to the threading mandrels.

6. A device as claimed in claim 5, wherein the hydraulic motor is connected into the press hydraulic circuit and is operated totally thereby.

FIG.1

FIG 2

FIG. 4

FIG. 3

FIG. 5

FIG. 6

FIG. 7

3/3

0064586

European Patent
Office

**EUROPEAN SEARCH REPORT**

**0064586**

Application number

EP  82 10 2304

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 072 847  (K. HEHL)<br>* The whole document * & US - A - 3 664 212 | 1 | B 29 F    1/00 |
| A | US-A-2 514 486  (L.B. GREEN)<br>*Column 8, line 56 - column 9, line 12; figures 1,6* | 1 | |
| A | US-A-3 719 446  (B.T. CLEEVELY)<br>*The whole document* | 1 | |
| A | US-A-2 363 808  (G.B. SAYRE)<br>*The whole document* | 1 | |

TECHNICAL FIELDS
SEARCHED (Int. Cl. ³)

B 29 F
B 29 D
B 22 D

The present search report has been drawn up for all claims

| Place of search | Date of completion of the search | Examiner |
|---|---|---|
| THE HAGUE | 06-08-1982 | BOLLEN J.A.G. |